# EUROPÄISCHE PATENTSCHRIFT

(11) **EP 2 926 192 B1**
(45) Veröffentlichungstag und Bekanntmachung des Hinweises auf die Patenterteilung: **16.08.2017**
(21) Anmeldenummer: 13798308.6
(22) Anmeldetag: 26.11.2013
(51) Int. Cl.: G02C 7/02, G02C 7/08, G02C 7/14

(54) **SEHHILFE ZUM MANIPULIEREN DES NETZHAUTBILDES FÜR AUGEN MIT MAKULADEGENERATION**
VISION AID FOR MANIPULATING THE RETINAL IMAGE FOR EYES HAVING MACULAR DEGENERATION
DISPOSITIF DE CORRECTION DE LA VUE SERVANT À MANIPULER L'IMAGE RÉTINIENNE D'YEUX ATTEINTS DE DÉGÉNÉRESCENCE MACULAIRE

(30) Priorität: 28.11.2012 DE 102012023478
(43) Veröffentlichungstag der Anmeldung: 07.10.2015
(73) Patentinhaber: Ilmenau Optics Solutions GmbH, 98693 Ilmenau (DE)
(72) Erfinder: HILLENBRAND, Matthias, 98693 Ilmenau (DE); SINZINGER, Stefan, 98693 Ilmenau (DE); MITSCHUNAS, Beate, 98693 Ilmenau (DE)
(74) Vertreter: Kailuweit & Uhlemann Patentanwälte Partnerschaft mbB
(86) Internationale Anmeldenummer: PCT/EP2013/074738
(87) Internationale Veröffentlichungsnummer: WO 2014/082998

(56) Entgegenhaltungen:
- WO-A1-2006/109924
- WO-A1-2009/017905
- DE-A1- 10 001 090
- US-A- 5 644 431
- US-A1- 2004 146 807
- US-A1- 2006 103 924
- US-A1- 2011 304 815
- Matthias Hillenbrand ET AL: "Novel vision aids for people suffering from Age-Related Macular Degeneration", DGaO Proceedings, 1. Juni 2012 (2012-06-01), XP055095997, Gefunden im Internet: URL:http://www.dgao-proceedings.de/downloa d/113/113_b28.pdf [gefunden am 2014-01-13] in der Anmeldung erwähnt

## Beschreibung

Die vorliegende Erfindung betrifft eine Vorrichtung zum Manipulieren einer Bildinformation und deren Verwendung. Im Folgenden soll mit dem Begriff Manipulation insbesondere die Vergrößerung und/oder Umlenkung und/oder symmetrische oder asymmetrische Verzerrung einer ein optisches System passierenden Bildinformation definiert werden.
Ein großes Anwendungsgebiet der Erfindung liegt bei der Therapie von an Makuladegeneration leidenden Patienten. Die Makuladegeneration (MD) stellt eine bisher nicht heilbare Schädigung der Netzhaut (Retina) des menschlichen Auges dar und tritt insbesondere bei älteren Menschen auf (Altersbedingte Makuladegeneration - AMD). Besonders stark betroffen ist typischerweise der, als Makula bezeichnete, zentrale Bereich der Retina inklusive der Fovea, der Stelle des schärfsten Sehens. An MD leidende Patienten klagen über einen Ausfall des zentralen Gesichtsfeldes und sind häufig nicht mehr in der Lage, zu lesen, sich im Straßenverkehr zu orientieren oder Gesichter zu erkennen. Die peripheren Bereiche der Netzhaut sind meist noch intakt und es besteht somit die Möglichkeit, die vom Gesichtsfeldausfall betroffenen Informationen auf die gesunden Bereiche der Netzhaut umzulenken. Da die Dichte der Sehzellen zum Rand des Gesichtsfeldes hin deutlich abfällt, ist hierbei eine Kombination aus Umlenkung und Vergrößerung der zentralen Information ratsam.

Im Stand der Technik existiert eine Vielzahl von Veröffentlichungen, die sich mit der Bildumlenkung und/oder Vergrößerung der Bildinformation mit Hilfe von Sehhilfen befassen. Dabei wird zwischen Sehhilfen, die nur einen Teil oder das gesamte von der Brille beeinflussbare Gesichtsfeld ablenken, unterschieden. So werden beispielsweise in der DE 10 2005 063 238 A1, EP 1 647 853 A1, US 2005/225714 A1 und US 2005/248723 A1 Möglichkeiten zur Bildumlenkung für das gesamte Gesichtsfeld beschrieben. Dagegen sind in EP 1 816 505 A1, GB 2 338 077 A und US 2007/097316 A1 Lösungen für die Bildumlenkung, die nur einen Teil des Gesichtsfeldes betreffen, angegeben.

Während in der DE 94 00 864 U1 die Bildvergrößerung das gesamte Gesichtsfeld betrifft, wird in der DE 10 2006 028 476 A1 die Bildvergrößerung nur für einen Teil des Gesichtsfeldes vorgestellt.

Außerdem sind aus dem Stand der Technik Lösungen bekannt, die eine Bildumlenkung in Kombination mit einer Bildvergrößerung betreffen. Beispielsweise beschreiben die US 4,958,924 A, die EP 0 357 848 A1, die EP 1 647 853 A1 oder die US 2007/252948 A1 eine Bildumlenkung in Kombination mit einer Bildvergrößerung für das gesamte Gesichtsfeld und die DE 102 48 036 A1 für einen Teil des Gesichtsfeldes.

Bei fast allen bekannten Sehhilfen handelt es sich um makroskopische Lösungen, bei denen einzelne konventionelle optische Elemente (Linsen, Prismen, Spiegel) zur Bildumlenkung und Bildvergrößerung eingesetzt werden (z. B. wird das komplette Gesichtsfeld durch einen Spiegel umgelenkt). Diese makroskopischen Lösungen sind meist mit einem hohen Gewicht (Linsen und Prismen) und Bauraum verbunden. Gleichzeitig gibt es erhebliche Einschränkungen beim abgedeckten Gesichtsfeld, den erreichbaren Vergrößerungen und der erreichbaren Bildumlenkung. Eine Ausnahme stellen die in der WO 2005/059630 A2 und der EP 1 816 505 A1 aufgezeigten Lösungen dar, bei denen das Bildumlenkelement aus einem Array mehrerer gleicher Teilelemente aufgebaut sein kann. Bei all diesen Lösungen wird ferner eine verzerrungsfreie Vergrößerung oder Umlenkung der Bildinformation angestrebt.

Darüber hinaus wird in der DE 10 2007 004 364 A1 allgemein eine Vorrichtung zur Fertigung von AMD-Sehhilfen vorgestellt.

Die Idee der Miniaturisierung einer gleichzeitig vergrößernden und umlenkenden Sehhilfe ist aus der Veröffentlichung: M. Hillenbrand, B. Mitschunas, S. Homberg und S. Sinzinger: Novel vision aids for people suffering from Age-Related Macular Degeneration, Proc. DGaO 2012, B28 bekannt. Die hier vorgestellten Ideen beschränken sich jedoch auf ein starres Brillenglas aus Kunststoff, in das einzelne Facetten mit jeweils einer refraktiven Front- und Rückfläche eingebracht sind. Diese Facetten sind planar in einer Ebene angeordnet, besitzen alle dieselbe Form und kombinieren eine vergrößernde mit einer bildumlenkenden Wirkung. Dadurch, dass die Facetten ohne Abstand aneinander angrenzen, wird in der entsprechenden Gesichtsfeldregion, die Originalinformation komplett durch die umgelenkte Information ersetzt. Vorrichtungen mit Arrays von optischen Mikrosegmenten und mit dazwischenliegenden Bereichen ohne spezifizierte optische Funktion sind bekannt aus US 2004/0146807, WO 2006/109924 und US 5,644,431. Aufgabe der vorliegenden Erfindung ist es deshalb die Nachteile aus dem Stand der Technik zu überwinden und eine kompakte, leistungsfähige und patientenfreundlichere Vorrichtung zum Manipulieren, insbesondere zum Vergrößern und/oder Umlenken und/oder Verzerren bzw. Verzeichnen einer ein optisches System passierenden Bildinformation bereitzustellen.

Erfindungsgemäß gelingt die Lösung dieser Aufgabe mit den Merkmalen des ersten Patentanspruchs. Bevorzugte weitere Ausführungsformen der erfindungsgemäßen Lösung sind in den Unteransprüchen angegeben.

Einzelheiten und Vorteile der Erfindung sind dem nachfolgenden Beschreibungsteil zu entnehmen, in dem die Erfindung unter Bezugnahme auf die beigefügten Zeichnungen näher erläutert wird. Es zeigt:
- Figur 1: - ein erstes Ausführungsbeispiel der erfindungsgemäßen Vorrichtung
- Figur 2: - drei Ausführungsbeispiele des mikrosegmentierten optischen Elements
- Figur 3: - ein zweites Ausführungsbeispiel der erfindungsgemäßen Vorrichtung

Mit der vorliegenden Erfindung wird eine Vorrichtung zum Manipulieren von Bildinformationen vorgestellt, die insbesondere als Sehhilfe für Patienten die z. B. durch Makuladegeneration an einem teilweisen Gesichtsfeldausfall leiden, verwendet werden kann. Sie kann aber auch von gesunden Personen eingesetzt werden, die Bildinformationen vergrößert und/oder versetzt und/oder verzerrt wahrnehmen möchten. Voraussetzung für den Einsatz der Erfindung ist, dass Bereiche der Netzhaut noch funktionstüchtig sind. Je nach Ausführungsform und Anwendungsbereich erlaubt die erfindungsgemäße Vorrichtung eine Vergrößerung und/oder Umlenkung und/oder Verzerrung bzw. Verzeichnung der Bildinformation.

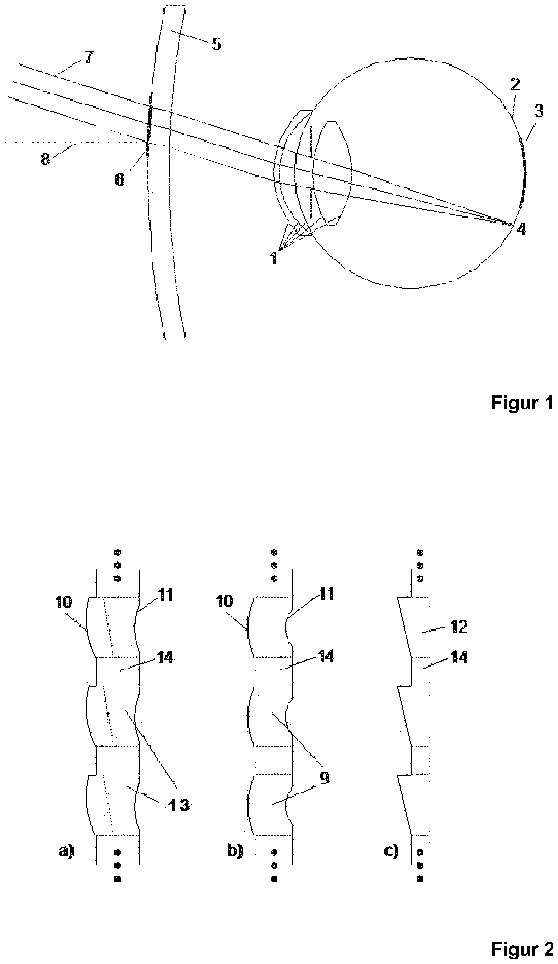

Wie in Figur 1 dargestellt, ist die erfindungsgemäße Vorrichtung insbesondere durch eine Mikrosegmentierung der optisch wirksamen Flächen gekennzeichnet, wobei ein einzelnes Mikrosegment jeweils ein vollständiges optisches System darstellt. Unter optischem System wird im Folgenden eine Linse, ein Prisma, eine Blende oder ein Spiegel oder eine Kombination dieser Elemente verstanden. Eine auf ein normales Brillenglas (5) aufgebrachte mikrosegmentierte Folie (6) sorgt für eine gleichzeitige Bildumlenkung und Bildvergrößerung. Am Bildpunkt (4) der Netzhaut überlagern sich das umgelenkte und vergrößerte Teilbild (8) und das nicht umgelenkte und nicht vergrößerte Teilbild (7). Die Helligkeit dieser beiden Teilbilder kann durch die Beschaffenheit und die Anordnung der Mikrosegmente auf der Folie beeinflusst werden. Durch die Kombination der mikrosegmentierten Zusatzfolie mit einer normalen Sehhilfe können weitere Fehlsichtigkeiten des Patienten korrigiert werden.

In Figur 2 sind drei verschiedene Ausführungsbeispiele des mikrosegmentierten optischen Elements (6) dargestellt. Es ist erfindungsgemäß abwechselnd aus einzelnen die Bildinformation manipulierenden Mikrosegmenten (9), (12) und (13) und die Bildinformation nicht manipulierenden Mikrosegmenten (14) aufgebaut, die arrayförmig angeordnet sind. Im Folgenden soll der Begriff Array die Anordnung von Mikrosegmenten gleicher oder verschiedener Größe und Form mit gleichem oder variablen Abstand bezeichnen.

Für die die Bildinformation manipulierenden Mikrosegmente (9), (12) und (13), die jeweils für sich genommen ein vollständiges optisches System darstellen, sind verschiedene Ausführungsformen möglich: die Bildinformation vergrößernde, umlenkende, verzerrende oder kombinierte Varianten. In Figur 2a und 2b repräsentierten die beiden Facetten (10) und (11) die Außenflächen eines miniaturisierten Galilei-Teleskops, das die Bildinformation vergrößert. Das Keilelement (12) realisiert in Figur 2a und 2c eine Bildumlenkung (Bildversatz und/oder Bildverzerrung). Die in Figur 2a, 2b und 2c dargestellten die Bildinformation nicht manipulierenden Komponenten (14) sind erfindungsgemäß als transparenter Steg ausgebildet und generieren ein zweites Teilbild. Durch das Flächenverhältnis zwischen den die Bildinformation manipulierenden und nicht manipulierenden Komponenten kann die Helligkeit der Teilbilder beeinflusst werden.

Das mikrosegmentierte optische Element (6) ist vorzugsweise in Form einer Folie ausgebildet, die auf normale Brillen aufgebracht werden kann. Die einzelnen Mikrosegmente können so klein ausfallen, dass sie vom menschlichen Auge nicht wahrgenommen werden. Bevorzugt liegt die größte flächige Ausdehnung der Mikrosegmente im Bereich von 0,1 mm bis 10 mm, besonders bevorzugt zwischen 0,25 mm und 4 mm. Ganz besonders bevorzugt liegt die Ausdehnung auf der Vorderseite bei ca. 1,2 mm und auf der Rückseite des mikrosegmentierten Elementes bei 0,6 mm. Die einzelnen Mikrosegmente können entweder alle die gleiche Form aufweisen oder auch eine über das Feld (Array) variable Form besitzen. Zusätzlich lässt sich das Flächenverhältnis zwischen den zu einer Bildumlenkung, Bildverzerrung und/oder Bildvergrößerung beitragenden Anteile und optisch nicht vergrößernden, verzerrenden bzw. bildumlenkenden Bereichen beliebig einstellen. Dies ermöglicht die Nutzung zweier Teilbilder, deren relative Helligkeit durch dieses Flächenverhältnis beeinflusst wird: Das erste Teilbild repräsentiert die ursprüngliche Objektinformation, die diesem Feldbereich zugeordnet ist, während das zweite Teilbild die umgelenkte, verzerrte und/oder vergrößerte Objektinformation beinhaltet. In den Extremvarianten sind in dem betroffenen Feldbereich entweder nur die normale oder nur die manipulierte Objektinformation sichtbar. Durch die Verwendung absorbierender Teilflächen, z. B. zur Falschlichtunterdrückung, kann die Teilbilderzeugung weiter optimiert werden.

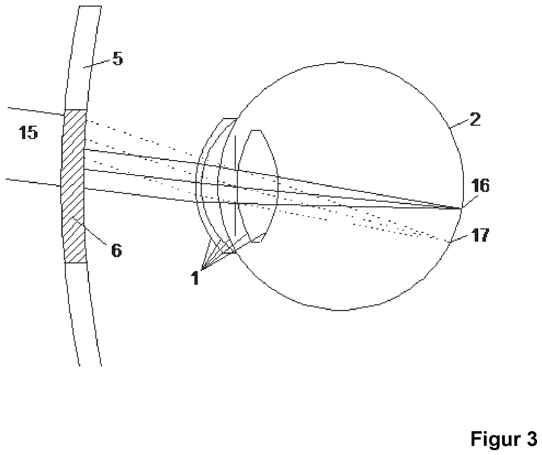

Wie in Figur 3 gezeigt, stellt eine weitere Ausführungsform der Erfindung eine Vorrichtung zum Manipulieren von Bildinformationen dar, die keine umlenkende und keine verzerrende sondern lediglich eine vergrößernde Wirkung über einen Teil des oder über das gesamte von der Sehhilfe beeinflussbare Gesichtsfeld bietet. Durch eine lokal variable Form der Mikrosegmente kann die Vergrößerung als eine Funktion des Feldwinkels gestaltet werden. Das mikrosegmentierte optische Element (6) ist hier so ausgelegt, dass ein von einem Objektpunkt kommendes Lichtbündel (15) auf der Netzhaut (3) zwei Teilbilder erzeugt: Ein nicht vergrößertes Teilbild (16) und ein vergrößertes Teilbild (17). Die Helligkeit dieser Teilbilder wird ebenfalls durch den Aufbau der Mikrosegmente beeinflusst. So ist es z. B. möglich für das Zentrum des Gesichtsfeldes das Teilbild (16) komplett auszublenden, während am Rand des mikrosegmentierten Bereichs ein kontinuierlicher Helligkeitsübergang zu den nicht mikrosegmentierten Außenbereichen des Brillenglases realisiert wird.

Der Begriff Vergrößerung ist hier allgemein definiert und umfasst auch eine effektive Verkleinerung der Bildinformation, z. B. zur Erweiterung des Gesichtsfeldes. Damit sind spezielle Ausführungsformen der erfindungsgemäßen Vorrichtung z. B. auch für Personen geeignet, bei denen die Makula noch intakt, aber der periphere Bereich der Retina geschädigt ist.

Die erfindungsgemäße Vorrichtung umfasst verschiedene Ausführungsformen. Diese beinhalten sowohl separat verwendbare Ausführungen, die wie eine normale Brille benutzt werden, als auch ergänzende Elemente, die zusätzlich zu einer normalen Brille getragen und sowohl vor als auch hinter normalen Sehhilfen positioniert werden können. Diese Zusatzelemente können sowohl eine starre als auch eine flexible Form aufweisen. Eine besondere Ausführungsform gemäß der Erfindung stellt eine flexible, ein- oder mehrschichtige Folie dar, die auf die Front- oder Rückfläche einer Brille aufgebracht wird. In einer bevorzugten Ausführungsform wird die flexible, ein- oder mehrschichtige Folie lediglich auf einer Teilfläche der Gläser einer Brille aufgebracht. Das mikrosegmentierte optische Element wird bspw. als Spritzgusselement aus PMMA (für brillenglasartige Elemente) oder durch Abformen, wie bspw. Prägen einer Folie hergestellt.

In allen Ausführungen kann das mikrosegmentierte optische Element sowohl eine planare als auch eine gewölbte Form haben. Ferner kann es selbstklebend oder mit Hilfsmitteln auf einer Trägerstruktur befestigt werden.

Die Erfindung zeichnet sich weiterhin dadurch aus, dass neben der Bildumlenkung, der Bildverzerrung und der Bildvergrößerung auch gleichzeitig die individuelle Fehlsichtigkeit eines Patienten korrigiert werden kann. Weiterhin bietet sich die Möglichkeit, eine beliebige Anzahl von Teilbildern zu erzeugen und so z. B. die zentrale Bildinformation gleichzeitig nach oben und unten umzulenken.

Bei der Realisierung als Zusatzelement zu einer weiteren Sehhilfe kann die Korrektur der Fehlsichtigkeit z. B. durch eine individuell angepasste Brille erfolgen, die gleichzeitig die Trägerstruktur für die Zusatzelemente darstellt.

Die erfindungsgemäße Vorrichtung kann aus verschiedensten Materialien bestehen. So sind z. B. Gläser und Kunststoffe denkbar, die sowohl ein homogenes als auch ein inhomogenes Materialgefüge aufweisen können. Die optische Wirkung der Vorrichtung kann auf verschiedenen Prinzipien wie Reflexion, Brechung, Beugung als auch auf den Effekten eines inhomogenen Materialgefüges beruhen. Durch die Kombination verschiedener Materialien und optischer Wirkprinzipien besteht weiterhin die Möglichkeit, Farbfehler zu korrigieren bzw. zu minimieren. Außerdem kann eine erfindungsgemäße Vorrichtung über verschiedene Bereiche für Fern- und Nahsicht verfügen. Für ein angenehmeres Sehempfinden des Trägers der Sehhilfe kann diese weiterhin mit einer Farbfilterung kombiniert werden. So besteht z. B. die Möglichkeit, kurzwellige Lichtanteile zu dämpfen. Ferner kann die Sehhilfe als optisches System mit einem variablen Wirkbereich und/oder veränderbarer optischer Wirkung realisiert werden.

### Bezugszeichenliste

- 1: - Modellauge
- 2: - Retina
- 3: - beschädigter Bereich der Retina
- 4: - Bildpunkt auf der Retina
- 5: - Trägerstruktur (Brillenglas)
- 6: - mikrosegmentiertes optisches Element
- 7: - dem Bildpunkt 4 zugeordnetes, nicht modifiziertes Strahlenbündel
- 8: - dem Bildpunkt 4 zugeordnetes, modifiziertes Strahlenbündel

- 9: - vergrößerndes Mikrosegment
- 10: - Frontfacette des vergrößernden Mikrosegments
- 11: - Rückfacette der vergrößernden Mikrosegments
- 12: - umlenkendes Mikrosegment
- 13: - kombiniertes Mikrosegment
- 14: - die Bildinformation nicht manipulierendes Mikrosegment

- 15: - von einem Objekt einfallendes Strahlenbündel
- 16: - Bildpunkt ohne Vergrößerung
- 17: - Bildpunkt mit Vergrößerung

## Patentansprüche

1. Sehhilfe zum Manipulieren zumindest eines Teils des Netzhautbildes eines Auges, wobei unter "Manipulieren" das Verlagern, Vergrößern, Verkleinern oder Verzerren zu verstehen ist, bestehend aus einem mikrosegmentierten optischen Element (6), welches eine Vielzahl von das Netzhautbild manipulierenden Mikrosegmenten (9, 12, 13) aufweist, die im Wechsel mit das Netzhautbild nicht manipulierenden Mikrosegmenten (14) arrayförmig derart angeordnet sind, dass gleichzeitig ein manipuliertes und ein unmanipuliertes Teilbild auf der Netzhaut entstehen.

2. Sehhilfe nach Anspruch 1 **dadurch gekennzeichnet, dass** die verlagernden Mikrosegmente (12) keilförmig ausgebildet sind.

3. Sehhilfe nach Anspruch 1 **dadurch gekennzeichnet, dass** die vergrößernden Mikrosegmente (9) als miniaturisiertes Galilei-Teleskop ausgeführt sind.

4. Sehhilfe nach Anspruch 2 **dadurch gekennzeichnet, dass** die das Netzhautbild manipulierenden Mikrosegmente (13) als miniaturisierte Galilei-Teleskope mit integriertem Keil oder als Galilei-Teleskope mit verschieden großen Keilen ausgeführt sind.

5. Sehhilfe nach Anspruch 1 **dadurch gekennzeichnet, dass** die das Netzhautbild nicht manipulierenden Mikrosegmente (14) transparent oder reflektiv und stegförmig ausgebildet sind.

6. Sehhilfe nach einem der Ansprüche 1 bis 5 **dadurch gekennzeichnet, dass** das mikrosegmentierte optische Element (6) eine flexible Folie ist.

7. Sehhilfe nach einem der Ansprüche 1 bis 7 **dadurch gekennzeichnet, dass** das mikrosegmentierte optische Element (6) selbsthaftend ist.

8. Sehhilfe nach einem der Ansprüche 1 bis 8 **dadurch gekennzeichnet, dass** das mikrosegmentierte optische Element (6) mit einer medizinischen Sehhilfe mit oder ohne absorbierende Flächen kombiniert ist.

9. Sehhilfe nach einem der Ansprüche 1 bis 8 **dadurch gekennzeichnet, dass** sie als medizinische Sehhilfe mit variablem Wirkbereich und/oder veränderbarer optischer Wirkung ausgebildet ist.

## Claims

1. A visual aid for manipulating at least part of the retinal image of an eye, wherein the term "manipulating" is understood to mean relocating, enlarging, reducing or distorting, which aid consists of a micro-segmented optical element (6) which comprises a plurality of microsegments (9, 12, 13) manipulating the retinal image, which are arranged in array form alternating with microsegments (14) not manipulating the retinal image such that a manipulated and a non-manipulated partial image are created on the retina at the same time.

2. The visual aid according to claim 1, **characterised in that** the relocating microsegments (12) are shaped as wedges.

3. The visual aid according to claim 1, **characterised in that** the enlarging microsegments (9) are implemented as a miniaturised Galilei telescope.

4. The visual aid according to claim 2, **characterised in that** the microsegments (13) manipulating the retinal image are implemented as miniaturised Galilei telescopes with different size wedges.

5. The visual aid according to claim 1, **characterised in that** the microsegments (14) not manipulating the retinal image are configured so as to be transparent or reflective and web-shaped.

6. The visual aid according to one of claims 1 to 5, **characterised in that** the micro-segmented optical element (6) is a flexible film.

7. The visual aid according to one of claims 1 to 7, **characterised in that** the micro-segmented optical element (6) is self-adhesive.

8. The visual aid according to one of claims 1 to 8, **characterised in that** the micro-segmented optical element (6) is combined with a medical visual aid with or without absorbing surfaces.

9. The visual aid according to one of claims 1 to 8, **characterised in that** it is configured as a medical visual aid with variable effective range and/or changeable optical effect.

## Revendications

1. Dispositif de correction de la vue pour manipuler au moins une partie de l'image de la rétine d'un oeil, dans lequel on entend par «manipulation» le déplacement, l'agrandissement, la diminution ou la déformation, se composant d'un élément optique microsegmenté (6) qui présente une pluralité de microsegments (9, 12, 13) manipulant l'image de la rétine disposés en forme de réseau en alternance avec des microsegments (14) ne manipulant pas l'image de la rétine de sorte qu'une image partielle manipulée et une image partielle non manipulée se forment simultanément sur la rétine.

2. Dispositif de correction de la vue selon la revendication 1, **caractérisé en ce que** les microsegments (12) qui déplacent sont réalisés en forme de coin.

3. Dispositif de correction de la vue selon la revendication 1, **caractérisé en ce que** les microsegments (9) qui agrandissent sont réalisés en tant que télescope de Galilée miniaturisé.

4. Dispositif de correction de la vue selon la revendication 2, **caractérisé en ce que** les microsegments (13) manipulant l'image de la rétine sont réalisés en tant que télescopes de Galilée miniaturisés avec un coin intégré ou en tant que télescopes de Galilée avec des coins de différentes dimensions.

5. Dispositif de correction de la vue selon la revendication 1, **caractérisé en ce que** les microsegments (14) ne manipulant pas l'image de la rétine sont réalisés de manière transparente ou réfléchissante et en forme de nervure.

6. Dispositif de correction de la vue selon l'une des revendications 1 à 5, **caractérisé en ce que** l'élément optique microsegmenté (6) est un film flexible.

7. Dispositif de correction de la vue selon l'une des revendications 1 à 7, **caractérisé en ce que** l'élément optique microsegmenté (6) est autoadhésif.

8. Dispositif de correction de la vue selon l'une des revendications 1 à 8, **caractérisé en ce que** l'élément optique microsegmenté (6) est combiné avec un dispositif de correction de la vue médical ou sans surfaces absorbantes.

9. Dispositif de correction de la vue selon l'une des revendications 1 à 8, **caractérisé en ce qu'**il est réalisé en tant que dispositif de correction de la vue médical avec une plage active variable et/ou un effet optique modifiable.
